(19) Europäisches Patentamt
European Patent Office
Office européen des brevets

(11) **EP 2 894 781 B1**

(12) **EUROPEAN PATENT SPECIFICATION**

(45) Date of publication and mention
of the grant of the patent:
**22.05.2019 Bulletin 2019/21**

(21) Application number: **13836150.6**

(22) Date of filing: **19.08.2013**

(51) Int Cl.:
*H02P 6/15* (2016.01)      *H02P 1/02* (2006.01)
*D06F 37/30* (2006.01)

(86) International application number:
**PCT/JP2013/004885**

(87) International publication number:
**WO 2014/038144 (13.03.2014 Gazette 2014/11)**

(54) **MOTOR CONTROL DEVICE, WASHING MACHINE COMPRISING SAME, AND WASHER/DRYER**

MOTORSTEUERUNGSVORRICHTUNG, WASCHMASCHINE DAMIT UND
WASCHMASCHINEN-/TROCKNERKOMBINATION

DISPOSITIF DE COMMANDE DE MOTEUR, MACHINE À LAVER LE COMPRENANT, ET MACHINE
À LAVER/SÉCHOIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2012   JP 2012196937**

(43) Date of publication of application:
**15.07.2015   Bulletin 2015/29**

(73) Proprietor: **Panasonic Intellectual Property
Management Co., Ltd.
Osaka-shi, Osaka 540-6207 (JP)**

(72) Inventor: **KAMEDA, Koji
Osaka-shi, Osaka 540-6207 (JP)**

(74) Representative: **SSM Sandmair
Patentanwälte Rechtsanwalt
Partnerschaft mbB
Joseph-Wild-Straße 20
81829 München (DE)**

(56) References cited:
**FR-A1- 2 860 359      JP-A- 2007 049 862
JP-A- 2010 119 220      JP-A- 2010 148 324
JP-A- 2010 239 698      US-A1- 2003 102 884**

**Description**

TECHNICAL FIELD

The present invention relates to a motor control device for controlling a brushless motor, and washing machine and washer/dryer provided with the motor control device.

BACKGROUND ART

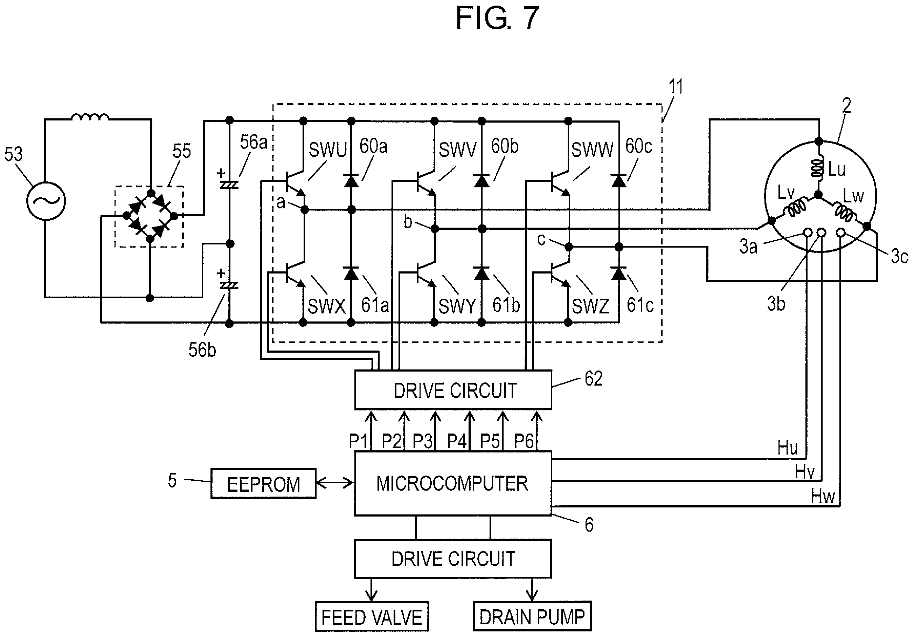

Motor control devices heretofore proposed include a type that inverter-controls a brushless motor provided with a position detector, and generally used for a washing machine and the like apparatuses (refer to Patent Literature 1, for example). By using such a device, the brushless motor can be controlled efficiently from low speed to high speed.
Referring to FIG. 7, description is provided hereinafter about a structure of a motor control device disclosed in Patent Literature 1.
FIG. 7 is a schematic diagram of the conventional motor control device for washing machine.
As shown in FIG. 7, the conventional motor control device includes brushless motor 2, position detectors 3a, 3b and 3c, inverter 11, control circuit 6, drive circuit 62, diode bridge 55, and so on, and it is connected with AC power source 53. Position detectors 3a, 3b and 3c detect a position of a rotor of brushless motor 2. Inverter 11 drives brushless motor 2. By using signals from position detector 3a, 3b, and 3c, control circuit 6 and drive circuit 62 control inverter 11 that drives brushless motor 2.
Position detectors 3a, 3b and 3c are composed of such devices as Hall integrated circuits ("Hall ICs"), for instance, that output signals indicating directions of magnetic fluxes of rotor magnets, and they are built into brushless motor 2.
A voltage from AC power source 53 is smoothed by capacitors 56a and 56b after having been rectified by diode bridge 55, and supplied to inverter 11, as shown in FIG. 7. Inverter 11 is made up from six switching elements SWU, SWV, SWW, SWX, SWY and SWZ, and six diodes 60a, 60b, 60c, 61a, 61b and 61c.
Description is provided next of control operation of brushless motor 2 performed by the conventional motor control device.
First, control circuit 6 detects a speed and a position of brushless motor 2 by using position signals of the rotor detected by position detectors 3a, 3b and 3c disposed inside brushless motor 2. Control circuit 6 then generates pulse-width modulated ("PWM") signals that drive the switching elements of inverter 11.
Drive circuit 62 makes amplification and conversion based on the PMW signals to produce voltages that can drive switching elements SWU, SWV, SWW, SWX, SWY and SWZ. Inverter 11 is thus driven to control brushless motor 2.
When magnetic fluxes of the rotor in brushless motor 2 are detected by position detectors 3a, 3b and 3c composed of Hall ICs or the like elements, for instance, there exists a problem that a shift in the phases occurs between a position of the rotor and the position obtained from the signals detected by the position detectors due to the following factors.
Specifically, the shift in the phases occurs due to accuracy of mounting of the Hall ICs, such as poor positioning accuracy of mounting them on a printed wiring board and positioning accuracy of installing the printed wiring board, mechanical accuracy of the rotor of the brushless motor, and accuracy of magnetization. It is for these reasons that the output signals of the position detectors become shifted in the phases with respect to the position of the rotor, or induced voltages of the rotor, that is to be detected normally. In some instances, the shift in the phases becomes so large as about 10 degrees in the electrical angle.
The shift in the signals of the position detectors, or a detected value of the position of the rotor in brushless motor 2, results in a decrease of efficiency when brushless motor 2 is driven, which consequently increases heating of brushless motor 2. In addition, the decrease of the efficiency and the increase of heating tend to become larger with increase in rotating speed of brushless motor 2. The decrease of the efficiency and the increase of heating become more significant and cause a loss of synchronization or out of control in some cases, especially when making advanced-angle control and induced voltages of brushless motor 2 become not negligible in proportion to the power supply voltage.
Therefore, the conventional motor control device initially supplies a sinusoidal wave of predetermined voltage and frequency to drive brushless motor 2 by open-loop control. In this case, an amount of shift in the phases between the induced voltages of sinusoidal wave and the output signals of the position detectors is detected and stored in memory device 5.
Next, brushless motor 2 is driven by feedback control based on the position signals output from the position detectors. The voltage of sinusoidal wave supplied to brushless motor 2 is corrected at this time based on the amount of positional shift. The influence of the shift in the phases is reduced by this operation, thereby suppressing the decrease in the efficiency and the increase of heating of brushless motor 2.
As described above, the conventional motor control device stores a difference in the phases between the voltages of sinusoidal wave produced when brushless motor 2 is driven by the open-loop control and the output signals of the position detectors, and the stored data is used for executing control. Thus, the difference in the phases of the signals of the position detectors to the induced voltages is corrected to some degree with the above operation when executing control.

However, the conventional motor control device is not configured to make control by detecting the relationship between voltages actually induced by brushless motor 2 and the signals of the position detectors. It is therefore difficult to control brushless motor 2 by detecting the difference in the phase of the signals of the position detectors according to variations of load and the like.

There are also such other problems as low controllability due to a large influence exerted upon control of a reactive current when brushless motor 2 is driven from a low speed to a high speed by vector control, especially when advanced-angle control is being made at the high speed.

US-2003/102884 A1 discloses a motor controller for correcting offset of a drive current of a motor. An offset amount calculating section calculates offset amounts of the drive currents when the motor is being driven. A drive signal correcting section corrects offset of the drive currents by correcting the duty ratios of drive signals based on the offset amounts.

FR 2 860 359 A1 describes an excitation controller of a brushless three phase motor in vehicle steering having a target rotating speed calculating unit to control stalling of starting of PWM field of field circuit based on corrected rotating position signals of rotor. The device has a flash memory or electrically erasable PROM to store rotating position of a rotor detected by Hall Effect units. A rotating position correction unit corrects the rotating position signals according to the stored position. A target speed calculating unit controls stalling of the starting of a pulse width modulation field of a field circuit based on the corrected signals. It is also described a method to control excitation of a brushless motor.

Citation List

Patent Literature

PTL1: Japanese Unexamined Patent Publication No 2002-325480
PTL2: US-2003/102884 A1
PTL3: FR 2 860 359 A1

SUMMARY OF THE INVENTION

The invention is defined by the subject-matter of independent claim 1. The dependent claims are directed to advantageous embodiments.

ADVANTAGES OF THE INVENTION

Advantageously, a motor control device is provided with a brushless motor, a position detector for detecting a position of a rotor of the brushless
motor, an inverter for driving the brushless motor, a current detector for detecting an electric current that flows to the brushless motor, and a controller for controlling the inverter based on an output signal of the position detector and an output signal of the current detector. The controller is provided with a memory device, and it controls winding currents fed to windings of the brushless motor, rotates a current vector, which is a composite of the winding currents of the brushless motor, for detecting a direction of the current vector when the output signal of the position detector changes, and stores a detected value of the direction of the current vector in the memory device as a correction value for position detection signal of the brushless motor. The controller has a structure configured to control the brushless motor by using the output signal of the position detector and the correction value for the position detection signal when it drives the brushless motor.

With the above structure, the controller can carry out control by correcting an amount of shift in the phase accurately even when such a shift in the phase is included in the signal of the position detector with respect to an induced voltage produced corresponding to the position of the rotor as against a correct (ideal) position where the rotor should be. In other words, the position detector of the brushless motor is provided with a function of correcting the detected position with high accuracy. Thus achieved, as a result, is the motor control device capable of driving the brushless motor efficiently from low speed to high speed.

In addition, a washing machine of a further advantageous embodiment is provided with the above motor control device.

Furthermore, a washer/dryer of the another further advantageous embodiment is provided with the above motor control device.

Accordingly, the further advantageous embodiments can achieve the washing machine and washer/dryer of energy efficiency and outstanding reliability.

BRIEF DESCRIPTION OF DRAWINGS

FIG. 1 is a schematic diagram of a main portion of a motor control device according to an exemplary embodiment of the present invention.

FIG. 2 is a graph illustrating a relationship between induced voltage of the brushless motor and position detection signal detected by a position detector according to the present exemplary embodiment.

FIG. 3 is a graph illustrating a case where there is no shift in the phases between a line-to-line induced voltage and the position detection signal of the position detector according to the present exemplary embodiment.

FIG. 4 is a graph illustrating a case where there is a shift in the phases between the line-to-line induced voltage and the position detection signal of the position detector according to the present exemplary embodiment.

FIG. 5 is a graph illustrating a case where there is another shift in the phases between the line-to-line induced voltage and the position detection signal of the position detector according to the present exemplary embodiment.

FIG. 6 is a schematic diagram of the brushless motor according to the present exemplary embodiment.

FIG. 7 is a schematic diagram of a conventional motor control device for washing machine.

DESCRIPTION OF EMBODIMENT

Referring to the accompanying drawings, description is provided hereinafter about an exemplary embodiment of the present invention. Here, same reference marks are used to designate same components as those described in the background art, and their details will be skipped. In addition, the following exemplary embodiment should be considered as not intended to limit the scope of the present invention.

EXEMPLARY EMBODIMENT

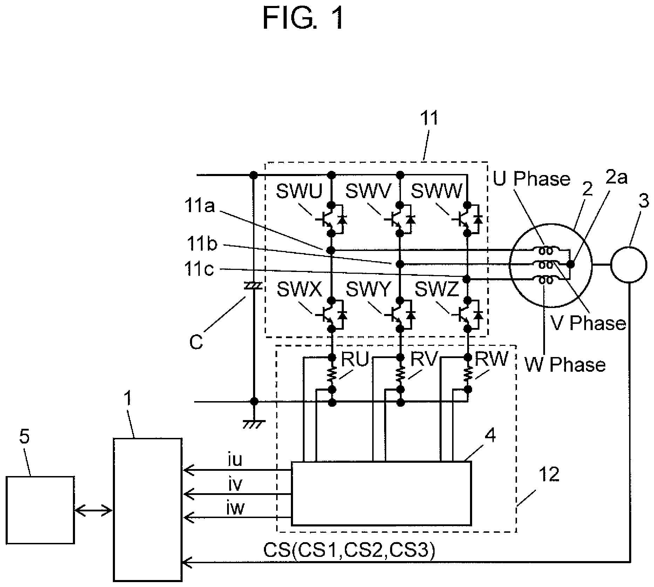

Description is provided hereinafter of a motor control device according to an exemplary embodiment of the present invention with reference to FIG. 1.

FIG. 1 is a schematic diagram of a main portion of the motor control device according to this embodiment of the present invention.

As shown in FIG. 1, the motor control device of this embodiment includes controller 1 having memory device 5 consisting of at least a memory such as RAM, brushless motor 2, position detector 3, current detector 12 provided with current detection circuit 4, inverter 11, and the like.

Inverter 11 that drives brushless motor 2 is provided with three parallel-connected combinations of two serially connected switching elements SWU and SWX, SWV and SWY, and SWW and SWZ, for a total of six switching elements. Note that FIG. 1 represents an example that uses insulated-gate bipolar transistors ("IGBTs") as the switching elements.

In this case, a combination of the switching elements that compose inverter 11 are connected at, for instance, connecting point 11a that is between a lower part (i.e., emitter side) of switching element SWU and an upper part (i.e., collector side) of switching element SWX. At each of other connecting points 11b and 11c, a lower part (emitter side) of another switching element and an upper part (collector side) of corresponding one of the switching elements are connected in the same manner. Connecting points 11a, 11b and 11c are then connected to individual windings of U phase, V phase and W phase of brushless motor 2.

In addition, the emitter sides of serially connected lower-side switching elements SWX, SWY and SWZ that compose inverter 11 are connected respectively with one ends of resistors RU, RV and RW of a low resistance value for current detection. On the other hand, other ends of resistors RU, RV and RW are connected with a negative side of the power supply of inverter 11.

Current detector 12 for detecting electric currents of brushless motor 2 is composed of resistors RU, RV and RW, and current detection circuit 4, as shown in FIG. 1.

In this case, both ends of resistors RU, RV, and RW for current detection are input to current detection circuit 4, which in turn amplifies voltages at the both ends of resistors RU, RV and RW, and outputs analog signals iu, iv and iw to controller 1.

The output signals iu, iv and iw input to controller 1 composed of a microcomputer, for instance, are analog-to-digital (A/D) converted. The A/D converted signals iu, iv and iw are used as detected current values for controlling a speed, torque, and the like of brushless motor 2.

Brushless motor 2 is also equipped with position detector 3 for detecting a position of a rotor of brushless motor 2. Position detector 3 outputs to controller 1 output signal CS that corresponds to the position of the rotor.

Output signal CS output from position detector 3 is input to controller 1, where output signal CS is used to control the speed, torque, and the like of brushless motor 2 in a similar manner as the detected current values described above.

Although what has been described in the above exemplary embodiment is the example that uses IGBTs as the switching elements, this is not restrictive. It is also possible to use MOSFETs, bipolar transistors and the like devices as the switching elements.

Moreover, although the example described in the above exemplary embodiment shows current detector 12 that uses three current detection resistors for detecting the electric currents, this is also not restrictive. Current detector 12 may be composed of a single resistor, for instance, so that the electric currents are detected by making current detection circuit 4 switch selectively the three combinations of switching elements that compose inverter 11. This helps simplify a configuration of current detector 12.

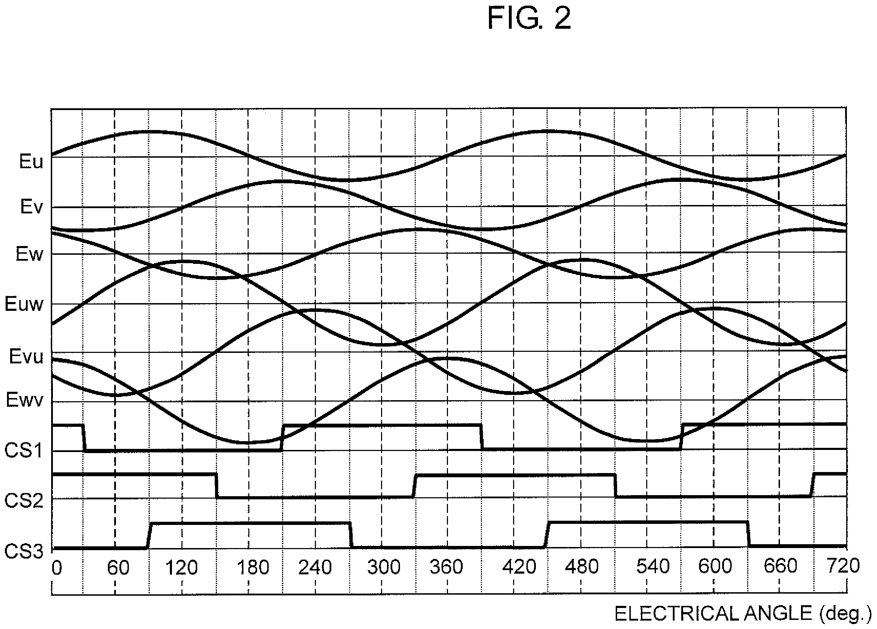

Referring to FIG. 2, description is provided hereinafter about relationship between induced voltages of the brushless motor and position detection signals detected by the position detector in the motor control device according to this exemplary embodiment.

FIG. 2 is a graph that illustrates the relationship between the induced voltages of the brushless motor and the position detection signals detected by the position detector according to this exemplary embodiment.

In the following description, the windings of brushless motor 2 are designated as U phase, V phase and W phase, as stated above.

Induced voltage Eu shown in FIG. 2 is a voltage generated at a winding terminal of U phase with reference to neutral point 2a when the rotor of brushless motor 2 is rotated from the outside. Similarly, induced voltage Ev is a voltage generated across the winding of V phase, and induced voltage Ew is a voltage generated across the winding of W phase.

In addition, neutral point 2a of the windings of brushless motor 2 made of a winding structure shown in FIG. 2 is not located as a terminal outside of brushless motor 2. Therefore, it is often the case that induced voltages Eu, Ev and Ew are presented generally by line-to-line induced voltages. In other words, line-to-line induced voltage Euw shown in FIG. 2 is a voltage generated at the winding terminal of U phase with reference to the winding terminal of W phase. Similarly, line-to-line induced voltage Evu is a voltage generated at the winding terminal of V phase with reference to the winding terminal of U phase, and line-to-line induced voltage Ewv is a voltage generated at the winding terminal of W phase with reference to the winding terminal of V phase.

In three-phase brushless motor 2, it is normal to have a structure in which position detector 3 produces three signals CS1, CS2 and CS3 to come out, as has been described in FIG. 7, though FIG. 1 shows output signal CS of position detector 3 with one line. For this reason, FIG. 2 shows three output signals CS1, CS2 and CS3 of position detector 3 as one example. In other words, output signal CS1 is a signal that is synchronized with the above-stated line-to-line induced voltage Euw, or, the signal of which a logical value (i.e., boolean value) changes when line-to-line induced voltage Euw becomes 0 V (zero volt), as shown in FIG. 2. Likewise, output signals CS2 and CS3 are signals that are synchronized with line-to-line induced voltages Evu and Ewv, respectively, that is, they are the signals of which logical values change when line-to-line induced voltages Evu and Ewv become 0 V (zero volt).

Here, FIG. 2 shows an example, in which output signals CS1, CS2 and CS3 of the position detector are such that their logical values change in synchronization with corresponding line-to-line induced voltages Euw, Evu and Ewv. This is not restrictive, however, and output signals CS1, CS2 and CS3 of the position detector can be such signals of which the logical values change in synchronization with induced voltages Eu, Ev and Ew corresponding to the U phase, V phase and W phase, respectively.

Furthermore, position detector 3 is composed of Hall elements, Hall ICs, or the like components, for example, and it detects magnetic flux of a rotor magnet of brushless motor 2, or magnetic flux of a magnet for position detection, mounted on the rotor along the same axis. With this structure, position detector 3 detects a position of the rotor.

In this case, detecting accuracy of position detector 3 for detecting the position of the rotor varies due to such factors as accuracy of magnetization of the rotor, mounting accuracy of the Hall elements or Hall ICs on a printed wiring board, positioning accuracy of installing the printed wiring board inside the motor, and detecting accuracy of the Hall elements or Hall ICs for detecting the magnetic flux.

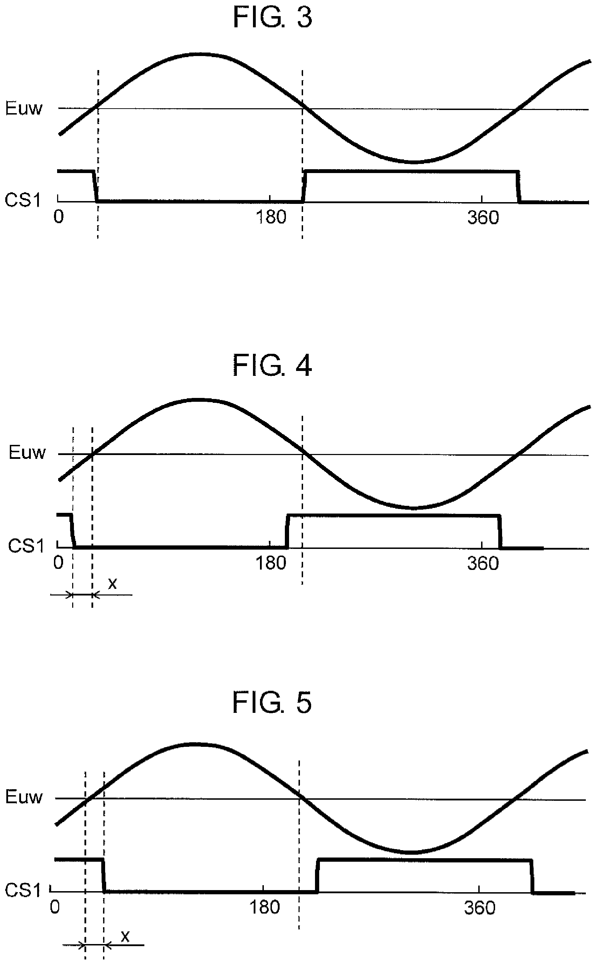

With reference to FIG. 2, description is provided hereinafter about the influence of the position detector when the detecting accuracy varies in the motor control device of this exemplary embodiment by using FIG. 3 to FIG. 5. To be specific, line-to-line induced voltage Euw of brushless motor 2 and output signal CS1 of position detector 3 illustrated in FIG. 2 are described as an example.

FIG. 3 is a graph that illustrates a case where there is no shift in the phases between the line-to-line induced voltage and the position detection signal of the position detector in this exemplary embodiment. FIG. 4 is a graph that illustrates a case where there is a shift in the phases between the line-to-line induced voltage and the position detection signal of the position detector in this exemplary embodiment. FIG. 5 is a graph that illustrates a case where there is another shift in the phases between the line-to-line induced voltage and the position detection signal of the position detector in this exemplary embodiment.

As shown in FIG. 3, position detection signal CS1 is synchronized with line-to-line induced voltage Euw. That is, a logical value (boolean value) of position detection signal CS1 changes at zero-crossing positions where line-to-line induced voltage Euw becomes 0 V (zero volt).

On the other hand, FIG. 4 shows a case of phase shift in which position detection signal CS1 of position detector 3 has a phase advanced ahead of line-to-line induced voltage Euw. That is, the logical value (boolean value) of position detection signal CS1 changes ahead of the zero-crossing positions where line-to-line induced voltage Euw becomes 0 V (zero volt).

Moreover, FIG. 5 shows another case of phase shift in which position detection signal CS1 of position detector 3 has a phase lagged behind line-to-line induced voltage Euw. That is, the logical value (boolean value) of position detection signal CS1 changes behind the zero-crossing positions where line-to-line induced voltage Euw becomes 0 V (zero volt).

When brushless motor 2 is controlled, a position of the rotor of brushless motor 2 is normally controlled by using the above position detection signals CS1, CS2 and CS3 of the position detector. In specific, the position of the rotor is obtained by carrying out interpolating operation at intervals of a control cycle (i.e., a period corresponding to clock cycle of controller 1, or 64 μs, for example) to control brushless motor 2.

For this reason, there occur adverse influences such as distortion in waveform of output currents, advancing or lagging in the phases of the electric currents with respect to the position of the rotor of the brushless motor 2 when there is a shift in the phases between position detection signals CS1, CS2 and CS3 and line-to-line induced voltages Euw, Evu and Ewv, as described with reference to FIG. 4 and FIG. 5. As a consequence, a decrease in the efficiency of brushless motor 2, noises, and the like problems result.

When the induced voltages of brushless motor 2 become relatively high as compared with the power supply voltage, advanced-angle control is normally performed. There is a possibility, however, that the advanced-angle control causes adverse influences upon the motor performances such as reduction of the efficiency and increase of heating due to a shift in the phases of position detection signals CS1, CS2 and CS3.

It thus becomes important to correct the shift in the phases between the position detection signals and the line-to-line induced voltages.

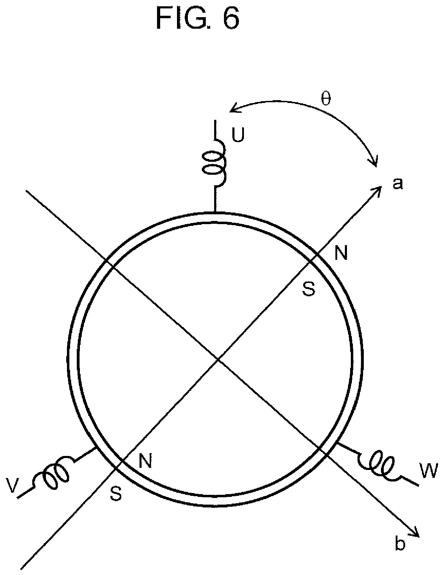

Referring now to FIG. 6, description is provided hereinafter of a method for correcting the position detected by the position detector in the motor control device of this exemplary embodiment.

FIG. 6 is a schematic diagram of the brushless motor according to this exemplary embodiment. It is assumed here that the relationship between the induced voltages and the position detection signal of the position detector when brushless motor 2 of FIG. 6 is turned clockwise is same as FIG. 2 described previously.

Note that FIG. 6 shows brushless motor 2 of a two-pole structure to simplify the description. In the case of brushless motor 2 of the two-pole structure, an electrical angle and a mechanical angle are the same value. A stator of brushless motor 2 is provided with three windings, or U-phase winding U, V-phase winding V and W-phase winding W. In addition, brushless motor 2 has a magnet disposed on the rotor.

First of all, consideration is made of a rotating coordinate of angle θ in the clockwise direction from a starting point in the direction of U-phase winding U, as shown in FIG. 6. Determine that coordinate axes have "a" axis in a direction of arbitrary angle θ, and "b" axis in another direction orthogonal to the "a" axis. Also assume that a magnetic pole appearing on an inner side of the stator is the N pole when electric currents are fed to winding U, winding V and winding W of the stator.

Assuming that a current vector, which is a composite current of the individual windings, is in the direction of angle θ, that is, when the composite current is fed from a positive direction of the "a" axis shown in FIG. 6, the N pole appears in the positive direction of the "a" axis, and the S pole appears in the negative direction of the "a" axis of the stator of FIG. 6. This makes the rotor of brushless motor 2 attracted to move into such an orientation that the S pole and the N pole face the positive direction and the negative direction of the "a" axis, respectively, by the attractive force and the repulsive force of the magnetic poles produced in the stator.

The angle θ in the direction of the current vector, that is the composite current of the individual windings, is slowly rotated under this condition. In this case, the rotor of brushless motor 2 also rotates slowly while maintaining the S pole and the N pole in the positive direction and the negative direction of the "a" axis, respectively. In an example of a belt-driven drum type washing machine having a motor of four-pole structure with a speed reduction ratio of about 10, to be specific, the motor is rotated slowly at 0.1 rpm.

At the same time with rotation of the angle θ, the position detection signal of the position detector changes along with rotation of the rotor of brushless motor 2. When a logical value (boolean value) of the position detection signal from the position detector changes at angle θ, a difference between the angle θ and an ideal position, where the rotor should be, is stored in memory device 5 as a correction value

That is, when detecting the correction value for the position detection signal of the brushless motor, the angle θ is rotated slowly by feeding the composite current of a constant value in the direction of "a" axis, and a changing point (i.e., the point where the logical value changes) of the position detection signal from the position detector is detected.

Description is provided hereinafter in further details about a method for controlling the electric current and a method for detecting angle θ in the direction of the current vector when the changing point is detected with the position detector.

First of all, description is provided of the method for controlling the electric current when the correction value for the position detection signal of brushless motor 2 is detected.

First, consideration is given of current commands for the "a" axis and the "b" axis to be detected. Here, the current commands for the "a" axis and the "b" axis are denoted as Ia* and Ib*, respectively, and these current commands can be expressed by the following equations:

$$Ia^* = I$$
$$Ib^* = 0$$

Assume here that I > 0. In addition, angle θ between winding U and the "a" axis is assumed to be an arbitrary value.

Next, electric current iu of U-phase winding U, electric current iv of V-phase winding V, and electric current iw of W-phase winding W are converted into electric currents along the "a" axis and the "b" axis by using equation (1):

$$\begin{bmatrix} ia \\ ib \end{bmatrix} = \sqrt{\frac{2}{3}} \begin{bmatrix} \cos\theta & -\frac{1}{2}\cos\theta - \frac{\sqrt{3}}{2}\sin\theta & -\frac{1}{2}\cos\theta + \frac{\sqrt{3}}{2}\sin\theta \\ \sin\theta & -\frac{1}{2}\sin\theta + \frac{\sqrt{3}}{2}\cos\theta & -\frac{1}{2}\sin\theta - \frac{\sqrt{3}}{2}\cos\theta \end{bmatrix} \bullet \begin{bmatrix} iu \\ iv \\ iw \end{bmatrix} \quad \cdots \cdots (1)$$

In the next step, current control is performed between the current commands for the "a" axis and the "b" axis and the electric currents ia and ib obtained with the equation (1). At this time, the current control is carried out according to proportional-plus-integral control (PI control), for instance.

Following the above, applied voltages va and vb to brushless motor 2 along the "a" axis and the "b" axis are determined by using equations (2):

$$\Delta ia = Ia* - ia$$
$$\Delta ib = Ib* - ib$$
$$va = Kpa \times \Delta ia + Kia \times \sum \Delta ia$$
$$vb = Kpb \times \Delta ib + Kib \times \sum \Delta ib \quad \cdots \cdots (2)$$

where Δia is a difference between current command Ia* for the "a" axis and detected current value ia, Kpa is a constant of proportionality, Kia is a constant of integration, Δib is a difference between current command Ib* for the "b" axis and detected current value ib, Kpb is a constant of proportionality, and Kib is a constant of integration.

Next, the applied voltages va and vb to brushless motor 2 along the "a" axis and the "b" axis obtained by using the equations (2) are converted into voltages of three-phase windings by using equation (3):

$$\begin{bmatrix} Vu \\ Vv \\ Vw \end{bmatrix} = \sqrt{\frac{2}{3}} \begin{bmatrix} \cos\theta & \sin\theta \\ -\frac{1}{2}\cos\theta - \frac{\sqrt{3}}{2}\sin\theta & -\frac{1}{2}\sin\theta + \frac{\sqrt{3}}{2}\cos\theta \\ -\frac{1}{2}\cos\theta - \frac{\sqrt{3}}{2}\sin\theta & -\frac{1}{2}\sin\theta - \frac{\sqrt{3}}{2}\cos\theta \end{bmatrix} \bullet \begin{bmatrix} va \\ vb \end{bmatrix} \quad \cdots \cdots (3)$$

When detecting the correction value for the position detection signal, the current control is carried out by applying voltages Vu, Vv and Vw for the three-phase windings obtained above, to brushless motor 2 through inverter 11. As a result, a direction of the current vector that is a composite of the winding currents can be controlled toward the positive direction of the "a" axis, and the angle θ is directed toward the current vector.

Referring to FIG. 2, description is provided next in detail about the method for detecting the direction θ of the current vector.

In the induced voltages of the brushless motor and position detection signals of the position detector shown in FIG. 2, description is given by using an example of detecting a changing point of position detection signal CS1 from H to L (i.e., changing point of the logical value) when the rotor rotates clockwise.

First, a position of the rotor at 30 degrees in the electrical angle shown in FIG. 2 is an ideal position of the changing point of position detection signal CS1 from H to L when rotating clockwise, and the ideal position of the rotor is assumed to be θcs1*.

Next, the current vector is slowly rotated while performing the current control described above. When the direction θ of the current vector is increased slowly, to be specific, the rotor of brushless motor 2 rotates clockwise, and the logical value of position detection signal CS1 of the position detector changes from H to L at about 30 degrees. When the change occurs in the logical value, the direction of the current vector is considered to be θcs1.

When position detection signal CS1 at this moment nearly coincides with 0V (zero volt) of line-to-line induced voltage Euw as shown in FIG. 3, for instance, θcs1 becomes approximately 30 degrees.

On the other hand, when position detection signal CS1 advances ahead of line-to-line induced voltage Euw, as shown in FIG. 4, θcs1 becomes a smaller value than 30 degrees. Or, when position detection signal CS1 lags behind line-to-line induced voltage Euw, as shown in FIG. 5, θcs1 becomes a larger value than 30 degrees.

Next, direction θcs1 of the current vector detected by the position detector is stored in memory device 5 shown in FIG. 1 as a correction value for the position detection signal.

The correction value for the position detection signal can be detected as a result of the above.

In the actual operation of driving the brushless motor, wherein brushless motor 2 is driven in the clockwise direction, for instance, control is carried out by using the correction value θcs1 for the position detection signal stored in advance in memory device 5 as an angular data rather than using the ideal location θcs1* of 30 degrees when position detection signal CS1 changes from H to L. This helps drive the brushless motor efficiently.

Description provided above pertains only to the changing point of position detection signal CS1 of the position detector from H to L while the rotor of brushless motor 2 rotates clockwise. However, a correction value for position detection signal can also be detected by using the same method for any of other position detection signals CS2 and CS3, and for a changing point from L to H.

In this exemplary embodiment, although what has been described above is an example in which no load is connected to the brushless motor when the correction value for the position detection signal is detected, this is not restrictive. A correction value for the position detection signal can be detected, for instance, with a load connected to the brushless motor.

Description is provided hereafter more specifically about a method for detecting a correction value for the position detection signal when a load is connected to the brushless motor.

That is, when a load is connected to the brushless motor, it is considered that the rotor of the brushless motor follows the direction θ of current vector with a small delay due to an influence of friction by the load.

In this case, the brushless motor is rotated clockwise first, and then counterclockwise.

Next, a direction of current vector is detected when a position detection signal of the position detector changes in the clockwise and counterclockwise rotating directions.

Next, an average value is calculated from the detected values of position detection signal between the clockwise and counterclockwise rotations.

The average value is then stored and retained in the memory device as a correction value for the position detection signal of the brushless motor. In this way, the position detection signal can be detected, with the influence of friction by the load connected to the brushless motor either suppressed or avoided. As a result, the brushless motor can be driven more efficiently.

Although the description provided in the above exemplary embodiment is an example of the brushless motor having a two-pole structure, this is not restrictive. A brushless motor of a four-pole structure, for instance, may also be suitable. When this is the case, the changing point where the logical value of the position detection signal changes from H to L in the clockwise rotation of the rotor described in the above exemplary embodiment exists in two locations that are apart from each other by 180 degrees in mechanical angle of the brushless motor. In this case, there arises a possibility that an error of the correction value for position detection signal increases when the position detection signal CS1 is detected only at one location and if two locations of the changing point where the logical value of the position detection signal CS1 changes from H to L are different.

Therefore, in this case, the changing point where the logical value of the position detection signal CS1 changes from H to L is detected for the two locations apart from each other by 180 degrees in the mechanical angle.

Next, an average value is calculated from the detected values of position detection signal CS1 in the two locations.

The average value is then stored in the memory device as a correction value for the position detection signal of the brushless motor. In this way, the brushless motor of four-pole structure can also be driven efficiently.

For any brushless motor of a structure having more than four poles, direction θ of the current vector of changing point of the position detection signal is detected at a number of locations corresponding to the number of poles, and stored in the memory device in the same manner. Thus, the brushless motor can be driven efficiently in the same way as the brushless motor of the four-pole structure.

In the above exemplary embodiment, though the description is provided of an example in which the direction of the current vector is shifted slowly, and the brushless motor is rotated slowly to detect the correction value for the position detection signal, this is not restrictive. For example, the correction value of the position detection signal may be detected in such a manner that the direction θ of the current vector is shifted slowly to rotate the brushless motor slowly in the proximity of the locations where the correction values of the position detection signal are obtained, whereas the direction θ of the current vector is shifted relatively faster to rotate the brushless motor faster in areas where the correction values of the position detection signal are not obtained. In a case of a belt-driven drum type washing machine having a motor of four-pole structure with a speed reduction ratio of about 10, for example, the motor is rotated at a relatively fast speed of 1 rpm, to be specific. As a result, the time taken to obtain the correction values of the position detection signal can be shortened.

The reason of this is because the time needed for correction of the position detector becomes too long if the current vector is rotated slowly from the first to the last of detecting the correction value for the brushless motor, when there are many changing points of the position detection signals that need to be corrected, or when an average value of changing points of a plurality of position detection signals need to be detected as the correction value for the brushless motor having four or more poles.

In the above exemplary embodiment, though the description is provided of an example in which a volatile memory such as RAM is used as the memory device for storing the correction value for the position detection signals, this is not restrictive. The memory device may instead be composed of a nonvolatile memory such as ROM and EEPROM. It is preferable in this case that correction of the position detection signals is carried out, and a correction value for the position detection signals is stored in a nonvolatile memory that forms the memory device, for instance, when the motor control device is shipped from the factory. As a result, the correction value for the position detection signals can be kept stored even after the power supply to the motor control device is cut off. Accordingly, the brushless motor can be driven efficiently immediately after reclosing the power supply to the motor control device without requiring acquisition of the correction value for the position detection signals.

Furthermore, the motor control device may be mounted on a washing machine, particularly a drum-type washing machine or a drum-type washer/dryer, though the description provided in the above exemplary embodiment does not specify any particular apparatus on which the motor control device is mounted.

In the case of such washing machine or washer/dryer, the drum needs to be driven at a low speed with a large torque in washing operation, and at a high speed with a small torque in spin-dry operation. When a brushless motor is used as the motor for driving a drum of the drum-type washing machine or drum-type washer/dryer, it is preferable that an induced voltage is increased to a certain extent in order to ensure the efficiency during the washing and spin-dry operations.

Because this makes the induced voltage of the brushless motor relatively higher as compared to the power supply voltage during the spin-dry operation, the brushless motor is generally controlled by means of advanced-angle control.

The motor control device of this exemplary embodiment is then mounted on the drum-type washing machine or washer/dryer. As a result, the drum can be driven efficiently, thereby achieving the drum-type washing machine or washer/dryer of high efficiency.

As described above, the motor control device according to the present invention as defined by the subject-matter of independent claim 1. The controller may have a structure configured to control the brushless motor by using the output signal of the position detector and the correction value for the position detection signal when it drives the brushless motor.

According to this structure, the brushless motor is subjected to a trial operation in order to correct the position detection signal. At this time, the detected value of the direction of the detected current vector is stored in the memory device as a correction value for the position detection signal. The controller then controls the brushless motor by using the output signal of the position detector and the correction value for the position detection signal. In this way, the position detection signal of the position detector mounted on the brushless motor can be corrected with good accuracy. There can be achieved, as a result, the motor control device capable of driving the brushless motor efficiently from a low speed to a high speed.

In addition, the motor control device according to an advantageous embodiment drives the brushless motor to rotate clockwise and counterclockwise, and carries out detection of directions of current vectors when the position detection signals of the position detector change in the clockwise and counterclockwise rotating directions. The motor control device can store an average value of detected values of the directions of the detected current vectors in both the clockwise and counterclockwise rotations, as a correction value for the position detection signals of the brushless motor.

It is possible with this configuration to make the brushless motor not susceptible to the influence of friction of a shaft or by a load of the brushless motor. In this way, the position detection signals of the position detector mounted on the brushless motor can be corrected more accurately. Thus achieved, as a result, is the motor control device capable of driving the brushless motor more efficiently from the low speed to the high speed.

Moreover, the motor control device according to another advantageous embodiment detects direction θ of the current vector at same cycles as a number of pole pairs of the brushless motor, and stores an average value of the detected values of the current vectors corresponding to the number of pole pairs in the memory device as a correction value for the position detection signals of the brushless motor.

It becomes possible with this configuration to make the brushless motor not susceptible to the influence of variations in the position detection signals with the individual pole pairs of the brushless motor. In this way, the position detection signals of the position detector mounted on the brushless motor can be corrected more accurately. Thus achieved, as a result, is the motor control device capable of driving the brushless motor more efficiently from the low speed to the high speed.

According to the motor control device of another advantageous embodiment, during the detection of the direction of the current vector, a rotating speed of the current vector in proximity to a location, where the correction value for the position detection signal is detected, is set slower than a rotating speed of the current vector in an area where the correction value for the position detection signal is not detected.

This helps reduce the time necessary to correct the position detection signal to be carried out beforehand.

Moreover, the memory device may be a nonvolatile memory, according to the motor control device of another advantageous embodiment.

According to this configuration, the correction value for the position detection signal can be kept stored even after the power supply to the motor control device of the brushless motor is cut off. This makes it unnecessary to acquire the correction value for the position detection signal of the brushless motor by carrying out a trial operation when the power supply to the motor control device is reclosed. As a result, the brushless motor can be driven efficiently immediately thereafter.

A washing machine of a further advantageous embodiment can be equipped with the above motor control device. Moreover, a washer/dryer of another further advantageous embodiment may also be equipped with the above motor control device.

With these structures, the brushless motor can be driven efficiently from washing operation or drying operation for which the drum is rotated with the brushless motor driven at a low speed to spin-dry operation for which the drum is rotated at a high speed. As a result, the further advantageous embodiments can achieve the washing machine and the washer/dryer featuring outstanding reliability and high efficiency.

INDUSTRIAL APPLICABILITY

The present invention is useful for motor control devices that are mountable on washing machines and the like apparatus and desired to have capability of driving brushless motors efficiently from low speed to high speed without being influenced by variations in detected positions of position detectors.

REFERENCE MARKS IN THE DRAWINGS

    1 controller
    2 brushless motor
    2a neutral point
    3, 3a, 3b, 3c position detector
    4 current detection circuit
    5 memory device
    6 control circuit
    11 inverter
    11a, 11b, 11c connecting point
    12 current detector
    53 AC power source

55 diode bridge
56a, 56b capacitor
60a, 60b, 60c, 61a, 61b, 61c diode
62 drive circuit

**Claims**

1. A motor control device comprising:

   a brushless motor (2);
   a position detector (3) for detecting a position of a rotor of the brushless motor (2);
   an inverter (11) for driving the brushless motor (2);
   a current detector (12) for detecting an electric current that flows to the brushless motor (2); and
   a controller (1) for controlling the inverter (11) based on an output signal of the position detector (3) and an output signal of the current detector (12),
   wherein the controller (1) is provided with a memory device (5), and configured to control winding currents fed to windings of the brushless motor (2),
   rotate a current vector, which is a composite of the winding currents of the brushless motor (2), and further configured to perform current control according to proportional-plus-integral control.
   **characterized in that**:

   the position detector (3) is composed of Hall elements or Hall integrated circuits;
   the controller (1) is further configured to rotate the current vector for detecting an angle ($\theta$) of the current vector when the output signal (CS) of the position detector (3) changes from low to high or high to low,
   store a difference between the angle ($\theta$) detected and an ideal position of the rotor in the memory device (5) as a correction value for a position detection signal of the brushless motor (2),
   control the brushless motor (2) by using the output signal (CS) of the position detector (3) and the correction value for the position detection signal when the brushless motor (2) is being driven.

2. The motor control device of claim 1, which is further configured to
   detect the angle ($\theta$) of the current vector at same cycles as a number of pole pairs of the brushless motor (2), and store an average value of detected values of the current vectors corresponding to the number of pole pairs in the memory device (5) as a correction value for the position detection signals of the brushless motor (2).

3. The motor control device of claim 1, the controller (1) is further configured that
   during the detection of the angle ($\theta$) of the current vector, a rotating speed of the current vector in proximity to a location, where the correction value for the position detection signal is detected, is set slower than a rotating speed of the current vector in an area where the correction value for the position detection signal is not detected.

4. The motor control device of claim 1, wherein the memory device (5) comprises a nonvolatile memory.

5. A washing machine provided with the motor control device of any one of claims 1 to 4.

6. A washer/dryer provided with the motor control device of any one of claims 1 to 4.

**Patentansprüche**

1. Motorsteuervorrichtung, die Folgendes umfasst:

   einen bürstenlosen Motor (2);
   einen Positionsdetektor (3) zum Detektieren einer Position eines Rotors des bürstenlosen Motors (2);
   einen Wechselrichter (11) zum Antreiben des bürstenlosen Motors (2);
   einen Stromdetektor (12) zum Detektieren eines elektrischen Stroms, der zu dem bürstenlosen Motor (2) fließt; und
   eine Steuerung (1) zum Steuern des Wechselrichters (11) auf der Basis eines Ausgangssignals des Positionsdetektors (3) und eines Ausgangssignals des Stromdetektors (12),

wobei die Steuerung (1) mit einer Speichervorrichtung (5) versehen ist und konfiguriert ist, die folgenden Schritte auszuführen:

Steuern von Wicklungsströmen, die den Wicklungen des bürstenlosen Motors (2) zugeführt werden,
Drehen eines Stromvektors, der sich aus den Wicklungsströmen des bürstenlosen Motors (2) zusammensetzt, und
ferner konfiguriert ist, eine Stromsteuerung in Übereinstimmung mit einer Proportional-Integralsteuerung durchzuführen,
**dadurch gekennzeichnet, dass**:

der Positionsdetektor (3) aus Hallelementen oder integrierten Hallschaltungen besteht;
die Steuerung (1) ferner konfiguriert ist, den Stromvektor zu drehen, um einen Winkel (q) des Stromvektors zu detektieren, wenn sich das Ausgangssignal (CS) des Positionsdetektors (3) von niedrig zu hoch oder von hoch zu niedrig ändert,
Speichern eines Unterschieds zwischen dem Winkel (q), der detektiert wird, und einer idealen Position des Rotors in der Speichervorrichtung (5) als einen Korrekturwert für ein Positionsdetektionssignal des bürstenlosen Motors (2),
Steuern des bürstenlosen Motors (2) durch Verwenden des Ausgangssignals (CS) des Positionsdetektors (3) und des Korrekturwerts für das Positionsdetektionssignal, wenn der bürstenlose Motor (2) angetrieben wird.

2. Motorsteuervorrichtung nach Anspruch 1, die ferner konfiguriert ist, die folgenden Schritte auszuführen:

Detektieren des Winkels (q) des Stromvektors bei denjenigen Zyklen, die einer Anzahl an Polpaaren des bürstenlosen Motors (2) entsprechen, und
Speichern eines Mittelwerts der detektierten Werte der Stromvektoren in Übereinstimmung mit der Anzahl von Polpaaren in der Speichervorrichtung (5) als einen Korrekturwert für die Positionsdetektionssignale des bürstenlosen Motors (2).

3. Motorsteuervorrichtung nach Anspruch 1, wobei die Steuerung (1) ferner so konfiguriert ist, dass während der Detektion des Winkels (q) des Stromvektors eine Drehzahl des Stromvektors in der Nähe einer Stelle, an der der Korrekturwert für das Positionsdetektionssignal detektiert wird, niedriger als eine Drehzahl des Stromvektors in einem Bereich, in dem der Korrekturwert für das Positionsdetektionssignal nicht detektiert wird, eingestellt ist.

4. Motorsteuervorrichtung nach Anspruch 1, wobei die Speichervorrichtung (5) einen Permanentspeicher umfasst.

5. Waschmaschine, die mit der Motorsteuervorrichtung nach einem der Ansprüche 1 bis 4 versehen ist.

6. Waschmaschine bzw. Trockner, der mit der Motorsteuervorrichtung nach einem der Ansprüche 1 bis 4 versehen ist.

**Revendications**

1. Dispositif de commande de moteur, comprenant :

un moteur sans balai (2) ;
un détecteur de position (3) pour détecter une position d'un rotor du moteur sans balai (2) ;
un onduleur (11) pour exciter le moteur sans balai (2) ;
un détecteur de courant (12) pour détecter un courant électrique qui circule vers le moteur sans balai (2) ; et
un organe de commande (1) pour commander l'onduleur (11) sur la base d'un signal de sortie du détecteur de position (3) et d'un signal de sortie du détecteur de courant (12),
dans lequel l'organe de commande (1) est pourvu d'un dispositif de mémoire (5), et configuré pour commander des courants d'enroulements fournis à des enroulements du moteur sans balai (2),
entraîner la rotation d'un vecteur de courant, qui est un composé des courants d'enroulements du moteur sans balai (2), et
en outre configuré pour réaliser une commande de courant selon une commande proportionnelle et intégrale,
**caractérisé en ce que** :

le détecteur de position (3) est composé d'éléments Hall ou de circuits intégrés Hall ;

l'organe de commande (1) est en outre configuré pour entraîner la rotation du vecteur de courant pour détecter un angle (θ) du vecteur de courant lorsque le signal de sortie (CS) du détecteur de position (3) change de bas à haut ou de haut à bas,

stocker une différence entre l'angle (θ) détecté et une position idéale du rotor dans le dispositif de mémoire (5) en tant que valeur de correction pour un signal de détection de position du moteur sans balai (2),

commander le moteur sans balai (2) en utilisant le signal de sortie (CS) du détecteur de position (3) et la valeur de correction pour le signal de détection de position lorsque le moteur sans balai (2) est excité.

2. Dispositif de commande de moteur selon la revendication 1, qui est en outre configuré pour

détecter l'angle (θ) du vecteur de courant aux mêmes cycles qu'un nombre de paires de pôles du moteur sans balai (2), et

stocker une valeur moyenne de valeurs détectées des vecteurs de courant correspondant au nombre de paires de pôles dans le dispositif de mémoire (5) en tant que valeur de correction pour les signaux de détection de position du moteur sans balai (2).

3. Dispositif de commande de moteur selon la revendication 1, l'organe de commande (1) est en outre configuré pour que durant la détection de l'angle (θ) du vecteur de courant, une vitesse de rotation du vecteur de courant à proximité d'un emplacement, où la valeur de correction pour le signal de détection de position est détectée, soit inférieure à une vitesse de rotation du vecteur de courant dans une zone où la valeur de correction pour le signal de détection de position n'est pas détectée.

4. Dispositif de commande de moteur selon la revendication 1, dans lequel le dispositif de mémoire (5) comprend une mémoire non volatile.

5. Machine à laver pourvue du dispositif de commande de moteur d'une quelconque des revendications 1 à 4.

6. Lave-linge/sèche-linge pourvu du dispositif de commande de moteur d'une quelconque des revendications 1 à 4.

# FIG. 1

FIG. 2

## FIG. 3

## FIG. 4

## FIG. 5

# FIG. 6

# FIG. 7

EP 2 894 781 B1

**EP 2 894 781 B1**

**REFERENCES CITED IN THE DESCRIPTION**

**Patent documents cited in the description**

- US 2003102884 A1
- FR 2860359 A1
- JP 2002325480 A